# EUROPEAN PATENT SPECIFICATION

(11) **EP 0 807 222 B1**
(45) Date of publication and mention of the grant of the patent: **03.03.1999**
(21) Application number: 95940400.5
(22) Date of filing: 05.12.1995
(51) Int. Cl.: F16K 1/22

(54) **A FLUXING DEVICE FOR A VALVE SEAT, IN PARTICULAR FOR BUTTERFLY VALVES**
REINIGUNGSVORRICHTUNG FÜR EIN VENTIL IN BESONDEREM FÜR EIN KLAPPENVENTIL
DISPOSITIF DE DECAPAGE POUR SIEGE DE SOUPAPE, NOTAMMENT DANS UN REGULATEUR A PAPILLON

(30) Priority: 03.02.1995 IT PR950005 U
(43) Date of publication of application: 19.11.1997
(73) Proprietor: VANESSA S.R.L., 29018 Lugagnano Val d'Arda (IT)
(72) Inventor: ALIANI, Alberto, I-29017 Fiorenzuola d'Arda (IT); BARTOCCIONI, Giorgio, I-29013 Carpaneto Piacentino (IT)
(74) Representative: Gotra, Stefano
(86) International application number: IT9500207
(87) International publication number: WO9623998

(56) References cited:
- DE-A- 4 343 619
- DE-C- 3 527 738
- DE-C- 3 920 365
- FR-A- 2 066 915

## Description

The present invention relates to a fluxing device for a valve seat, in particular for butterfly valves.

One of the problems arising during the opening and the closing of valves, and in particular of the butterfly valves, is that, in presence of fluids which tend to solidify, that is forming solid encrustations and deposits, encrustations in the sealed seat area of the valve cause problems during the opening and closing phases of the valve, as well as during the sealing phase thereof.

The opening of the valve, in fact, results very difficult, as the encrustations can prevent the shutter from moving.

The closing of the valve can also be hindered, as the encrustations can prevent the total sealed closing of the shutter.

A first solution to eliminate the above mentioned drawbacks is that to provide an external ring soldered to the body of the valve in such a way so as to become an integral part of the whole valve itself, and comprising a channel which allows the inlet of steam at a pressure higher than the pressure inside the line on which the valve operates.

The channel ends up in nozzles which spray the steam in the sealed area of the valve carrying out a wash which dissolves and removes any encrustations or deposits.

However, said solution has a very high cost as a notable intervention on the valve body is needed, and furthermore, in the absence of steam when the washing phase is not in progress, a return of pressure comes about in the channel and in the jacket obtained outside the valve, causing the valve body to an external pressure.

Furthermore, it is necessary that said jacket is structured in such a way so as to resist said pressure, thus increasing the constructive complexity of the valve.

A second known solution envisages a ring that, instead of being soldered entirely to the body of the valve, is separated from the valve and is held in place between two gaskets and between two flanges.

This second solution, which foresees the use of an interchangeable ring, which can be applied to already existing valves and on both sides of the valve, presents the drawback to require the presence of a plurality of spraying nozzles placed inside the line on which the valve operates, and so said nozzles are subject to the erosive action of the fluid which is present in said line.

The aim of the present invention is to eliminate the above mentioned drawbacks, and in particular to make available a device for the fluxing of the valve seat, capable of washing said seat effectively, and at the same time capable of remaining perfectly clean without being deteriorated or hindered, during functioning, by the fluid present in the line in which the valve operates.

The above mentioned aims are fully achieved by the fluxing device object of the present invention, as characterised in the appended claims, and in particular in that it comprises at least one protection element for at least one spraying element. Said protection element is shaped in such a way so as to protect at least one spraying element with respect to the fluid which flows in the duct to which the valve is applied.

The protection element is preferably shaped as a frustum of cone.

Further characteristics and advantages of the present invention will better emerge from the detailed description that follows of a preferred embodiment here illustrated in the form of a nonlimiting example in which:

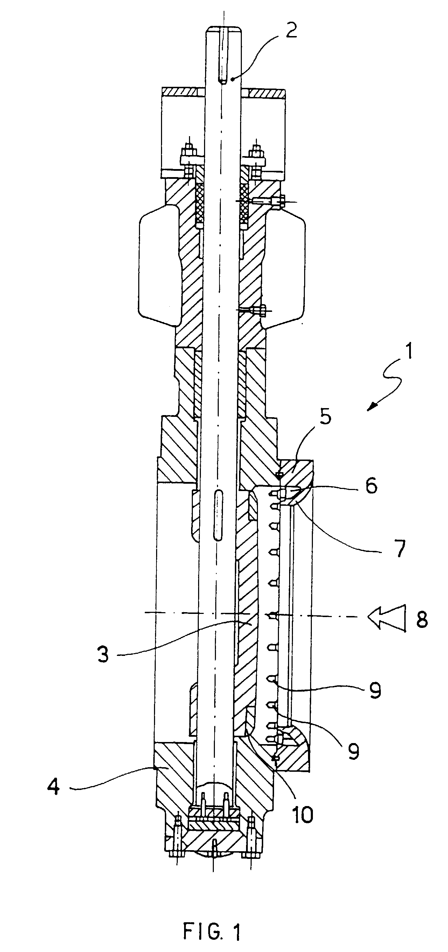

- figure 1 shows the valve in a median vertical section;

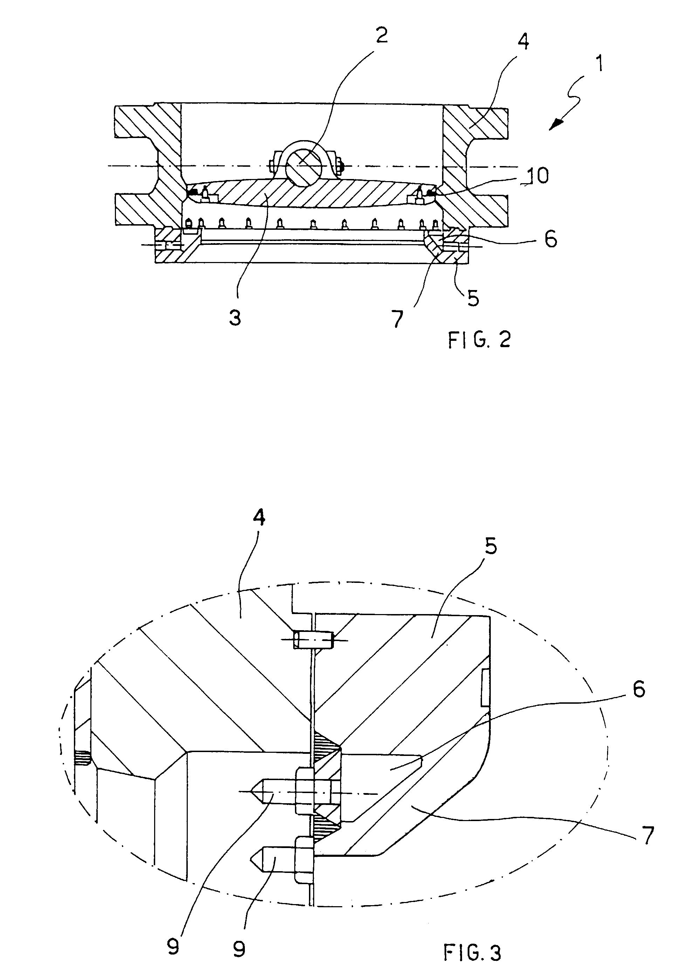

- figure 2 shows the valve in a transversal section;
- figure 3 shows a particular of the device in the same section as figure 1.

With reference to the figures, 1 denotes, as a whole, a butterfly valve whose stem 2 can rotate by about 90°, thus permitting the opening/closing of a disk-shaped shutter 3.

The valve 1 includes a body 4 which is inserted, in a known way, into a duct, not illustrated, in which the the valve is to operate.

The structure of the butterfly valve, already known, includes a fluxing ring 5 for the valve seat.

Said ring, applied outside the body of the valve, held in place between gaskets and/or flanges, has the aim to supply a channel 6 for a steam flow (or of other cleaning fluid) which is destined to be let in or sprayed in the area of the valve seat so as to clean it and to remove any deposits or encrustations.

According to the present invention, in a completely original way, the channel 6 is obtained in a protection element 7 coupled to the ring 5. The protection element 7 is substantially shaped as a frustum of cone and has the narrow part of the cone turned in the same direction as that of the flowing of the fluid in the duct, indicated by an arrow 8.

The protection element 7 is made as an internal projection of the ring 5, preferably made as a single body together with said ring, and in said cone-shaped projection is obtained at least one channel 6 for a cleaning fluid ending up in at least one spraying element 9 which is protected by said projection.

The spraying element 9, here illustrated, is composed of a plurality of nozzles placed circularly in the periphery of the ring, said nozzles being protected by the element 7 and equidistantly positioned between themselves.

The protection element 7, shaped as a frustum of cone, constitutes a protection not only for the nozzles but also for the valve seat with respect to the fluid which flows in the duct.

In this way, the fluid flowing in the duct and any impurities do not flow directly against the nozzles 9, protected by the frustum cone projection, and neither against the area of the valve seat, also resulting protected in such a way that the flow of the fluid is more concentrated in the central area of the valve with respect to the circular peripheral area of the seat and of the gaskets 10.

This permits a better operating of the valve and reduces the problems caused by deposits and encrustations of the valve seat itself.

The ring 5, together with the protection element 7, is of an interchangeable type and can be applied on both sides of the valve and also on valves already on the market.

By means of the channel 6, steam or other cleaning fluids are let in, which, by means of the nozzles 9, are directed towards the valve seat for removing any encrustations or deposits.

## Claims

1. A fluxing device for a valve seat, in particular for a butterfly valve (1) applied to ducts in which fluids flow, of a type comprising at least one spraying element (9) coupled to a ring (5) interchangeable and applied outside the valve (1), said ring being held in place between gaskets and/or flanges, characterised in that it comprises at least one protection element (7) for said at least one spraying element (9), shaped in such a way so as to protect said at least one spraying element (9) with respect to the fluid which flows in the duct in which the valve (1) is applied.

2. A device, as claimed in claim 1, wherein said at least one protection element (7) is substantially shaped as a frustum of cone, whose narrow part of the cone is turned in the same direction as that of the flow of the fluid in the duct.

3. A device as claimed in claim 2, wherein said protection element (7) is made as an internal projection of the ring (5) in which it is obtained at least one channel (6) for a cleaning fluid ending up in said at least one spraying element (9), protected by said projection.

4. A device as claimed in any of the above mentioned claims, wherein said protection element (7) is shaped in such a way so as to also constitute a protection for the valve seat with respect to the fluid which flows in the duct.

5. A device as claimed in any of the above mentioned claims, wherein said at least one spraying element (9) is made of a plurality of nozzles equidistantly placed along the periphery of the ring (5).

## Patentansprüche

1. Reinigungsvorrichtung für ein Ventil, in Besonderem für ein in Leitungen eingebautes Klappenventil, in denen Flüssigkeiten fliessen, welche Reinigungsvorrichtung zumindest ein mit einem austauschbaren, aussen an dem Ventil (1) angebrachten Ring (5) verbundenes Sprühelement (9) aufweist, wobei der Ring zwischen Dichtungen bzw. Flanschen angeordnet ist, dadurch gekennzeichnet, dass die Reinigungsvorrichtung zumindest ein so ausgebildetes Schutzelement (7) für das zumindest eine Sprühelement (9) umfasst, dass sie das zumindest eine Sprühelement (9) vor der durch die Leitung fliessenden Flüssigkeit schützt, in der das Ventil (1) eingebaut ist.

2. Vorrichtung nach Anspruch 1, dadurch gekennzeichnt, dass das zumindest eine Schutzelement (7) im wesentlichen kegelstumpfförmig ausgebildet ist und der sich verjüngende Kegelteil in die gleiche Richtung wie der Flüssigkeitsfluss in der Leitung ausgerichtet ist.

3. Vorrichtung nach Anspruch 2, dadurch gekennzeichnet, dass das genannte Schutzelement (7) aus einem inneren Vorsprung des Ringes (5) besteht, in dem zumindest ein Kanal (6) für eine Reinigungsflüssigkeit ausgebildet wird, der in das zumindest eine Sprühelement (9) mündet, das durch die genannten Schutzvorrichtung geschützt ist.

4. Vorrichtung nach einem der vorhergehenden Ansprüche, dadurch gekennzeichnet, dass das genannte Schutzelement (7) so ausgebildet ist, dass es ferner einen Schutz für den Ventilsitz vor der durch die Leitung fliessenden Flüssigkeit bildet.

5. Vorrichtung nach einem der vorhergehenden Ansprüche, dadurch gekennzeichnet, dass das zumindest eine Sprühelement (9) aus einer Vielzahl von mit gleichen Abständen zueinander an dem Umfang des Ringes (5) angeordneten Düsen besteht.

## Revendications

1. Un dispositif de décapage pour un siège de soupape, notamment dans un régulateur à papillon appliqué sur les conduits dans lesquels s'écoulent les fluides, du type comprenant au moins un élément vaporisateur (9) accouplé à un anneau (5) interchangeable et appliqué à l'extérieur du régulateur (1), ledit anneau étant maintenu en place entre des joints et/ou flanges, caractérisé en ce qu'il comprend au moins un élément de protection (7) pour ledit élément vaporisateur (9), conformé de manière à protéger ledit élément vaporisateur (9) par rapport au fluide qui s'écoule dans le conduit sur lequel le régulateur est appliqué.

2. Un dispositif selon la revendication 1, dans lequel ledit élément de protection (7) est substantiellement conformé en tronc de cône, dont la partie mince est tournée dans la même direction que le flux du fluide dans la conduite.

3. Un dispositif selon la revendication 2, dans lequel ledit élément de projection (7) est réalisé sous la forme d'une saillie interne de l'anneau (5) dans laquelle est obtenu au moins un canal (6) pour un fluide de nettoyage débouchant dans ledit élément vaporisateur (9), protégé par ladite protection.

4. Un dispositif selon n'importe laquelle des revendications mentionnées ci-dessus, dans lequel ledit élément de protection (7) est conformé de manière à constituer une protection pour le siège de soupape par rapport au fluide qui s'écoule dans le conduit.

5. Un dispositif selon n'importe laquelle des revendications mentionnées ci-dessus, dans lequel ledit élément vaporisateur (9) est formé d'une pluralité de buses équidistantes placées le long de la périphérie de l'anneau (5).
